# DEMANDE DE BREVET EUROPEEN

(11) **EP 4 483 982 A1**
(43) Date de publication de la demande: **01.01.2025**
(21) Numéro de dépôt: 24184481.0
(22) Date de dépôt: 25.06.2024
(51) Int. Cl.: B01D 29/23, B01D 35/02

(54) **DISPOSITIF DE FILTRATION, EN PARTICULIER POUR UN CIRCUIT DE REFROIDISSEMENT**

(30) Priorité: 30.06.2023 FR 2306989
(71) Demandeur: HUTCHINSON, 75008 Paris (FR)
(72) Inventeur: GILLET, Damien, 45220 Château Renard (FR)
(74) Mandataire: Gevers & Orès

(57) **Abrégé**

L'invention concerne un dispositif de filtration (22) comprenant :
- un raccord (24) tubulaire comportant au moins une entrée (30) de fluide de refroidissement et au moins une sortie (32),
- un filtre (26) à particules monté dans ledit raccord (24) et s'étendant dans le raccord (24) depuis ladite entrée (30), ce filtre (24) ayant une forme générale allongée et comportant une première extrémité longitudinale (36) ouverte située du côté de ladite entrée (30) et une seconde extrémité longitudinale (38) fermée située à l'intérieur du raccord (24), ce filtre (26) comportant une toile filtrante (44) s'étendant autour et le long d'un axe longitudinal (X) du filtre (26), et un corps (46) surmoulé,
le filtre (26) étant monté de manière amovible dans ledit raccord (24) et en ladite seconde extrémité (38) présentant une paroi de fond qui converge vers l'axe longitudinal (X) et vers ladite première extrémité longitudinale (36).

## Description

### Domaine technique de l'invention

L'invention concerne le domaine des dispositifs de filtration, en particulier pour les circuits de refroidissement.

### Arrière-plan technique

L'état de la technique est illustré par le document EP-A1 -4098345.

Les moteurs de véhicules automobiles, par exemple, sont équipés d'un circuit de refroidissement nécessaire à leur bon fonctionnement. Le circuit de refroidissement permet de maintenir le moteur à une température de fonctionnement inférieure à la température maximale préconisée et d'éviter la surchauffe du moteur.

Typiquement, un circuit de refroidissement pour moteur comprend des canalisations pour la circulation d'un fluide de refroidissement à partir d'une source de fluide de refroidissement jusqu'au moteur. Au cours de la vie du moteur, des particules peuvent s'accumuler dans les canalisations jusqu'à les obturer et empêcher le passage du fluide de refroidissement. L'accumulation de ces particules peut causer des dommages irréversibles dans le moteur ou dans les organes du circuit de refroidissement.

Afin de prévenir l'accumulation de ces particules, il a été proposé d'équiper les circuits de refroidissement avec des dispositifs de filtration comprenant des filtres à particules. Toutefois, les filtres à particules proposés sont encombrants et leur intégration dans les moteurs n'est pas aisée. En outre, le stockage et le transport des filtres à particules sont particulièrement contraignants et le procédé de fabrication de tels filtres est complexe.

Par conséquent, il est d'usage de ne pas équiper les circuits de refroidissement de filtres à particules, ce qui a tendance à nuire au bon fonctionnement et à l'intégrité du moteur.

Le document US-A1 -2020/0054973 décrit un dispositif de filtration pour un circuit de refroidissement d'un moteur à pile à combustible. Le dispositif de filtration comprend un raccord tubulaire comportant au moins une entrée de fluide de refroidissement et au moins une sortie de ce fluide de refroidissement, et un filtre à particules monté dans le raccord et s'étendant dans le raccord depuis l'entrée du raccord.

Le filtre présente une forme générale allongée et comporte une première extrémité longitudinale ouverte située du côté de l'entrée et une seconde extrémité longitudinale fermée située à l'intérieur du raccord. Le filtre comprend une toile filtrante s'étendant autour et le long d'un axe longitudinal du filtre, et un corps surmoulé sur la toile.

Selon ce document, le filtre à particules est fixé au raccord par soudage. Un tel système de fixation du filtre présente des inconvénients. En effet, le procédé de soudage est long, coûteux et complexe. En outre, il constitue un moyen de fixation irréversible. En cas d'usure de la toile filtrante par exemple ou en cas de colmatage par accumulation de particules dans le filtre, il est nécessaire de démonter l'ensemble du dispositif de filtration, c'est-à-dire de retirer le raccord du circuit de refroidissement et de le remplacer par un nouvel ensemble formé par un raccord et un filtre.

En outre, selon ce document, la seconde extrémité du filtre présente un entonnoir qui permet de collecter et de décharger les particules. Une telle configuration en entonnoir de la seconde extrémité du filtre engendre des perturbations dans l'écoulement du fluide de refroidissement et donc des pertes de charge dans le circuit de refroidissement qui peuvent être nuisibles aux performances du moteur.

Par conséquent, il existe un besoin de fournir un dispositif de filtration pour un circuit de refroidissement, qui limite les pertes de charge dans le circuit de refroidissement et qui soit facile à mettre en oeuvre, peu coûteux et dont la maintenance est aisée.

### Résumé de l'invention

A cet effet, l'invention propose un dispositif de filtration, en particulier pour un circuit de refroidissement, le dispositif de filtration comprenant :
- un raccord tubulaire comportant au moins une entrée de fluide de refroidissement et au moins une sortie de ce fluide de refroidissement,
- un filtre à particules monté dans ledit raccord et s'étendant dans le raccord depuis ladite entrée, ce filtre ayant une forme générale allongée et comportant une première extrémité longitudinale ouverte située du côté de ladite entrée et une seconde extrémité longitudinale fermée située à l'intérieur du raccord, ce filtre comportant une toile filtrante s'étendant autour et le long d'un axe longitudinal du filtre, et un corps surmoulé.

Le dispositif de filtration est remarquable en ce que filtre est monté de manière amovible dans ledit raccord et en ce que ladite seconde extrémité présente une paroi de fond qui converge vers l'axe longitudinal et vers ladite première extrémité longitudinale.

Selon l'invention, le filtre est monté dans le raccord de manière amovible. Une telle liaison amovible permet de faciliter le montage et le démontage du filtre dans le raccord. L'installation du dispositif de filtration ainsi que sa maintenance sont facilitées.

En outre, selon l'invention, la paroi de fond de la seconde extrémité du filtre converge vers l'axe longitudinal et vers la première extrémité par opposition à la configuration en entonnoir de l'art antérieur. Une telle caractéristique de l'invention permet de guider le fluide de refroidissement s'écoulant dans le filtre vers la toile filtrante et ainsi de favoriser son écoulement dans le circuit de refroidissement, en aval du dispositif de filtration. Comparée à une paroi de fond annulaire ou en entonnoir, la paroi de fond selon l'invention permet de réduire les perturbations du flux dans le raccord et ainsi de diminuer les pertes de charge dans le circuit de refroidissement.

Grâce au dispositif de filtration de l'invention, il est donc possible de facilement monter et démonter le filtre, et garantir l'écoulement du fluide de refroidissement dans le circuit de refroidissement sans pertes de charges significatives.

L'invention peut comprendre une ou plusieurs des caractéristiques suivantes, prises isolément les unes des autres ou en combinaison les unes avec les autres :
-- le circuit de refroidissement est un circuit de refroidissement d'un moteur ou d'une pile à combustible,
   - la paroi de fond comprend une surface conique ou tronconique qui est située à l'intérieur du filtre et qui présente un sommet centré sur l'axe longitudinal,
   - ladite surface conique ou tronconique présente une génératrice formant un angle α avec l'axe longitudinal compris entre 10° et 45°,
   - la première extrémité longitudinale présente un premier diamètre et ladite seconde extrémité longitudinale présente un second diamètre, le premier diamètre étant supérieur au second diamètre, de préférence de 1,5 fois à quatre fois plus grand que le second diamètre,
   - la paroi de fond a une dimension longitudinale le long dudit axe longitudinal, qui représente entre 2 et 20%, et de préférence entre 5 et 10%, d'une longueur du filtre le long de cet axe longitudinal,
   - le filtre comprend une paroi de filtration tronconique au niveau de laquelle est située la toile filtrante, la paroi de fond étant reliée à cette paroi de filtration par un rebord annulaire située à la seconde extrémité longitudinale du filtre,
   - la paroi de fond définit, à l'extérieur du filtre, un creux qui est centré sur ledit axe longitudinal et qui est entouré par ledit rebord annulaire,
   - la première extrémité longitudinale présente un épaulement annulaire externe en appui axial sur un bord annulaire de l'entrée du raccord,
   - le filtre est monté par clipsage dans ledit raccord,
   - la première extrémité longitudinale présente à sa périphérie externe au moins une languette de fixation, et le raccord présente au moins une lumière dans laquelle la languette s'emboite par clipsage,
   - le corps comprend des nervures longitudinales, et avantageusement des nervures annulaires surmoulées sur la toile filtrante et qui s'étendent autour de l'axe longitudinal et sont reliées auxdites nervures longitudinales,
   - le nombre de languettes est égal au nombre de nervures longitudinales et les languettes sont alignées axialement avec les nervures longitudinales ou sont situées sur ces nervures longitudinales,
   - le filtre a une longueur telle qu'il s'étend sur plus de 80% de la longueur du raccord,
   - la toile filtrante et le corps comprennent un matériau polymérique, avantageusement identique et choisi par exemple parmi des polyamides,
   - la toile filtrante comprend un textile, de préférence tissé,
   - la toile filtrante présente une surface de filtration comprise entre 60% et 95%, de préférence entre 70% et 80% d'une surface externe totale du filtre,
-- le raccord est en T et présente des première et seconde tubulures coaxiales et une troisième tubulure intermédiaire qui s'étend perpendiculairement à l'axe commun des première et seconde tubulures,
-- le diamètre interne des première et seconde tubulures est par exemple de 1,5 à quatre plus grand que le diamètre interne de la troisième tubulure, en particulier deux fois plus grand que le diamètre interne de la troisième tubulure,
-- le raccord comprend entre trois et dix lumières, ou plus de dix lumières,
-- le diamètre interne de l'épaulement annulaire externe de la première extrémité longitudinale est égal au diamètre interne du bord annulaire de l'entrée du raccord,
-- la toile filtrante présente des pores de filtration,
-- les pores présentent une taille de l'ordre du micromètre, par exemple compris entre 10 µm et 500 µm,
-- la toile filtrante est dépourvue de charges comprenant des fibres,
-- la toile filtrante comprend un textile, de préférence de type tissé,
-- le textile comprend des fils présentant de préférence un diamètre moyen compris entre 100 µm et 2000 µm,
-- le sommet de la surface conique de la paroi de fond est pointu,
-- la longueur de la surface conique ou tronconique de la paroi de fond est au moins égale au diamètre de la base de la surface conique,
-- la paroi de fond et la paroi de filtration forment un angle β compris entre 5° et 45°, l'angle β étant mesuré dans un plan passant par l'axe longitudinal,
-- le creux situé à la seconde extrémité du filtre comprend au moins un point d'injection de matière, de préférence centré sur l'axe longitudinal,
-- le creux présente une surface tronconique dont l'extrémité de plus petit diamètre est reliée à une surface sensiblement perpendiculaire audit axe longitudinal,
-- l'extrémité de plus grand diamètre de la surface tronconique est reliée audit rebord,
-- la paroi de fond a une épaisseur qui varie, cette épaisseur étant mesurée le long de l'axe longitudinal,
-- l'épaisseur de la paroi de fond est maximale au niveau de l'axe longitudinal du filtre, et décroit vers la périphérie de cette paroi de fond,
-- l'épaisseur maximale de la paroi de fond est au moins 1,5 fois supérieure à l'épaisseur minimale de la paroi de fond mesurée au niveau de sa périphérie,
-- les nervures longitudinales sont exclusivement situées à l'extérieur de la toile filtrante,
-- les nervures longitudinales s'étendent de la première extrémité jusqu'à la seconde extrémité du filtre,
-- les nervures longitudinales s'étendent entre deux nervures annulaires et présentent chacune une première extrémité reliée à une nervure annulaire et une seconde extrémité reliée à une nervure annulaire adjacente,
-- les nervures longitudinales et/ou les nervures annuaires sont surmoulées sur la toile filtrante,
-- parmi les nervures longitudinales et les nervures annulaires, seules les nervures annulaires sont surmoulées sur la toile filtrante,
-- les nervures longitudinales sont fixées aux nervures annulaires, un espace radial étant ménagé entre la toile filtrante et chaque nervure longitudinale,
-- le filtre comprend une entrée opposée à la seconde extrémité longitudinale, l'entrée présentant un arrondi,
-- l'entrée du filtre est formée sur la première extrémité longitudinale du filtre,
-- l'entrée est en appui sur le raccord,
-- l'entrée du filtre est venue de matière avec le corps du filtre,
-- l'arrondi présente un rayon compris entre 2 mm et 10 mm, de préférence entre 3 mm et 5 mm.

L'invention concerne également un circuit de refroidissement pour un moteur.

Le circuit de refroidissement est remarquable en ce qu'il comprend au moins un dispositif de filtration selon l'une quelconque des caractéristiques précédentes.

### Brève description des figures

D'autres caractéristiques et avantages ressortiront de la description qui suit de modes de réalisation non limitatifs de l'invention en référence aux dessins annexés sur lesquels :
la figure 1 est une représentation schématique d'un circuit de refroidissement pour un moteur de véhicule automobile,
la figure 2 est une représentation en coupe longitudinale partielle d'un dispositif de filtration équipant le circuit de la figure 1,
la figure 3 est une représentation en perspective du dispositif de filtration selon l'invention comprenant un raccord selon l'invention et un filtre selon un premier mode de réalisation,
la figure 4 est une représentation en perspective du filtre équipant le dispositif de filtration des figures 2 et 3,
la figure 5 est une représentation en coupe longitudinale partielle du filtre de la figure 4,
la figure 6 est une vue agrandie et en coupe longitudinale partielle de l'entrée du raccord dans laquelle est montée le filtre,
la figure 7 est une représentation en perspective d'un filtre selon un second mode de réalisation de l'invention,
la figure 8 est une représentation en perspective d'un filtre selon un troisième mode de réalisation de l'invention,
la figure 9 est une représentation en coupe longitudinale du dispositif de filtration selon l'invention comprenant le raccord selon l'invention et un filtre selon un autre mode de réalisation,
la figure 10 est une vue de côté du filtre équipant le dispositif de filtration de la figure 9,
la figure 11 est une autre vue en perspective du filtre de la figure 10.

### Description détaillée de l'invention

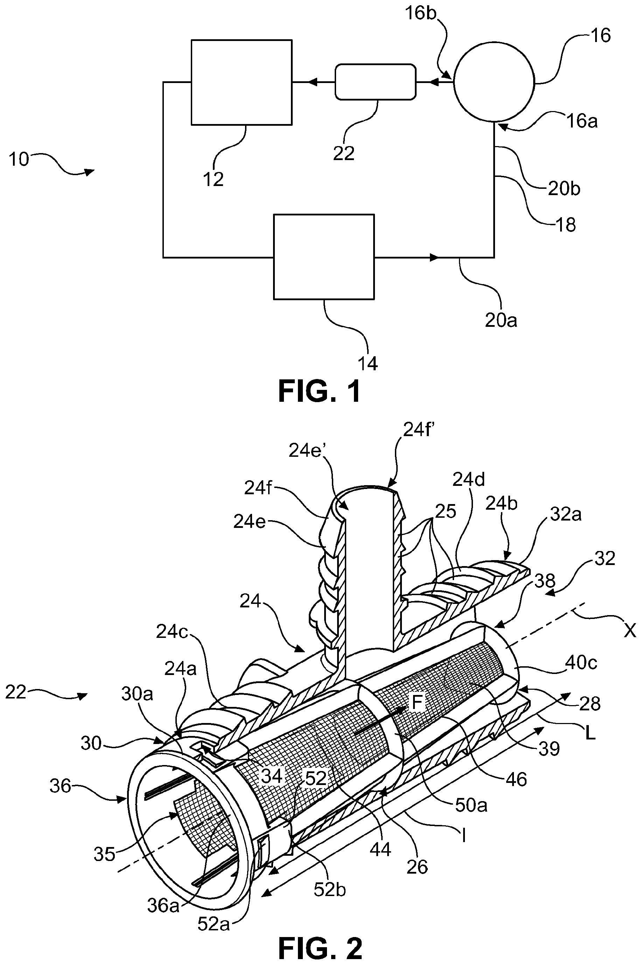

La figure 1 illustre par exemple un circuit de refroidissement 10 pour un moteur 12, en particulier d'un véhicule automobile. Le circuit de refroidissement 10 pourrait toutefois être selon l'invention le circuit de refroidissement d'une pile à combustible.

Le circuit de refroidissement 10 comprend par exemple une source 14 de fluide de refroidissement, une pompe 16 agencée entre la source 14 et le moteur 12. La pompe 16 comprend un port d'entrée 16a de fluide de refroidissement reliée à la source 14 et un port de sortie 16b de fluide de refroidissement. Le circuit de refroidissement 10 comprend en outre au moins une canalisation 18 pour le passage du fluide de refroidissement de la source 14 jusqu'au moteur 12. La canalisation 18 est par exemple formée d'une pluralité de conduits 20a, 20b raccordés entre eux.

Le moteur 12 est par exemple thermique, électrique ou à hydrogène par exemple de type pile à combustible.

Le fluide de refroidissement est par exemple un liquide, en particulier de l'eau.

Selon l'invention, le circuit de refroidissement 10 comprend en outre un dispositif de filtration 22. Le dispositif de filtration 22 est notamment monté entre la pompe 16 et le moteur 12, en particulier entre le port de sortie 16b de la pompe 16 et le moteur 12. En référence à la figure 2, le dispositif de filtration 22 comprend un raccord 24 et un filtre 26 à particules monté dans le raccord 24.

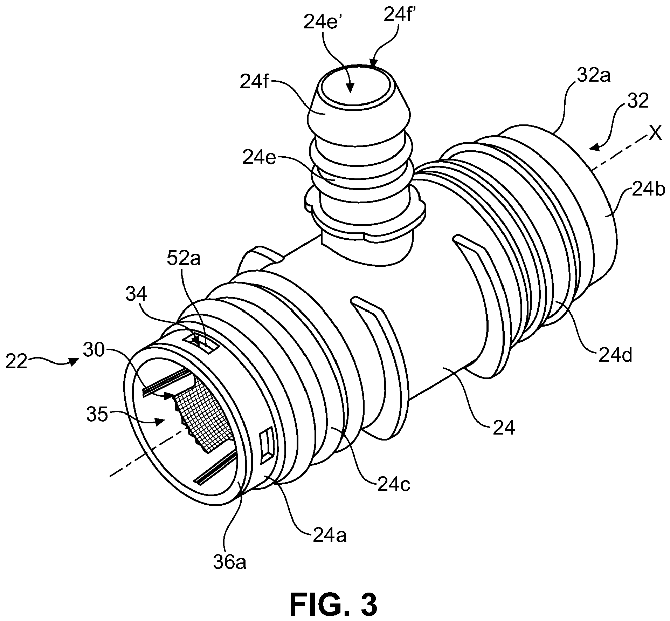

En référence aux figures 2 et 3, le raccord 24 est tubulaire et présente un axe longitudinal X.

Dans la présente invention, les termes « longitudinal », « longitudinalement », « axial », « axialement », « radial », « radialement » sont entendus par rapport à l'axe longitudinal X.

Les termes « interne », « intérieurement », « intérieur », « externe », « extérieurement », « extérieur », sont entendus par rapport à l'éloignement de l'axe longitudinal X le long d'un axe radial s'étendant perpendiculairement à l'axe longitudinal X.

Les termes « amont », « aval » s'entendent par rapport au sens d'écoulement F du fluide de refroidissement dans le dispositif de filtration 22 le long de l'axe longitudinal X.

Le raccord 24 présente un corps tubulaire qui s'étend longitudinalement entre des première et seconde extrémités longitudinales 24a, 24b. Il comprend en outre un premier passage interne 28 s'étendant longitudinalement entre les extrémités longitudinales 24a, 24b.

Le raccord 24 comprend au moins une entrée 30 de fluide de refroidissement et une sortie 32 de ce fluide de refroidissement. L'entrée 30 est par exemple reliée à la sortie 16b de la pompe 16 et la sortie 32 est reliée au moteur 12. Les entrée et sortie 30, 32 sont par exemple respectivement ménagées au niveau des première et seconde extrémités longitudinales 24a, 24b. Les entrée et sortie 30, 32 présentent chacune un bord annulaire 30a, 32a.

Selon un exemple de réalisation de l'invention, le raccord 24 est par exemple en T. Selon cet exemple, le corps tubulaire comprend une première tubulure 24c s'étendant longitudinalement à partir de la première extrémité 24a, une seconde tubulure 24d s'étendant jusqu'à la seconde extrémité 24b et étant coaxiale à la première tubulure 24c. Le corps tubulaire comprend une troisième tubulure 24e intermédiaire qui s'étend perpendiculairement à l'axe longitudinal X des première et seconde tubulures 24c, 24d. La troisième tubulure 24e présente un passage auxiliaire 24e' du fluide de refroidissement qui débouche dans le premier passage interne 28. La troisième tubulure 24e présente en outre une extrémité radiale 24f externe sur laquelle est ménagée une seconde sortie 24f' du fluide de refroidissement.

Les première, seconde et troisième tubulures 24c, 24d, 24e présentent chacune un diamètre interne, le diamètre interne des première et seconde tubulures 24c, 24d étant avantageusement identique et supérieur au diamètre interne de la troisième tubulure 24e. Le diamètre interne des première et seconde tubulures 24c, 24d est par exemple de 1, 5 à quatre plus grand que le diamètre interne de la troisième tubulure 24e, en particulier deux fois plus grand que le diamètre interne de la troisième tubulure 24e.

Selon un mode de réalisation avantageux de l'invention, le raccord 24 présente en outre au moins une lumière 34, et avantageusement une pluralité de lumières 34. Les lumières 34 sont ménagées dans la première extrémité 24a du raccord 24. Les lumières 34 sont régulièrement réparties autour de l'axe longitudinal X. Leur nombre est par exemple compris entre trois et dix, et peut être supérieur à dix. Chaque lumière 34 présente par exemple une forme polygonale, par exemple carré ou rectangulaire.

Le raccord 24 est monté dans le circuit de refroidissement 10, par exemple par emmanchement en force dans les conduits 20a, 20b. A cet effet, le raccord 24 comprend par exemple des cannelures annulaires 25 externes formées par exemple sur les première, seconde et troisième tubulures 24c, 24d, 24e.

Le filtre 26 est un filtre à particules monté dans le raccord 24. Le filtre 26 présente une forme générale allongée centrée sur l'axe longitudinal X. Préférentiellement, le filtre 26 présente une longueur l telle que mesurée selon l'axe longitudinal X supérieure ou égale à 80% de la longueur L du raccord 24.

Le filtre 26 est situé dans le premier passage 28. Le filtre 26 présente en outre un second passage interne 35 pour la circulation du fluide de refroidissement.

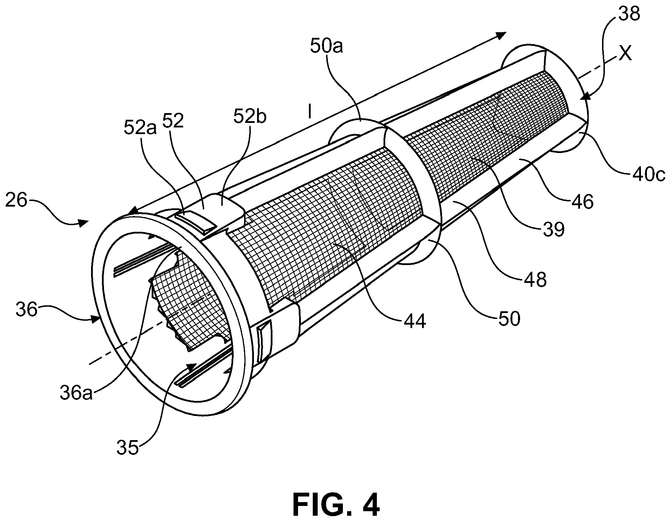

Comme mieux visible sur la figure 4, le filtre 26 s'étend le long de l'axe longitudinal X entre une première extrémité longitudinale 36 ouverte et une seconde extrémité longitudinale 38 fermée et reliées entre elles par exemple par une paroi de filtration 39 tronconique et centrée sur l'axe longitudinal X. Les première et seconde extrémités longitudinales 36, 38 sont annulaires et centrées sur l'axe longitudinal X. Elles présentent respectivement un premier et un second diamètre interne. Le premier diamètre interne de la première extrémité longitudinale 36 du filtre 26 est supérieur au second diamètre interne de la seconde extrémité longitudinale 38. Préférentiellement, le premier diamètre est 1,5 fois à quatre fois plus grand, en particulier deux fois plus grand que le second diamètre interne de la seconde extrémité longitudinale 38.

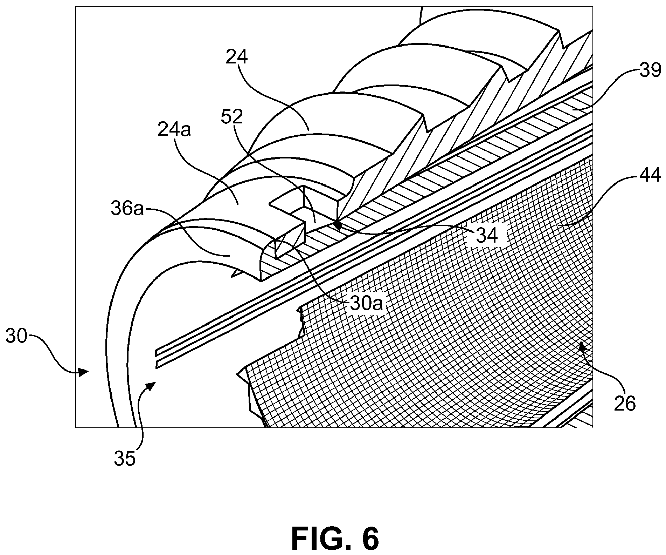

La première extrémité longitudinale 36 est située du côté de l'entrée 30 du raccord 24. Avantageusement, la première extrémité longitudinale 36 présente un épaulement annulaire externe ou une lèvre 36a qui est en appuie axial contre le bord annulaire 30a de l'entrée 30 du raccord 24. Comme mieux visible sur les figures 3 ou 6, le diamètre externe de l'épaulement annulaire externe 36a est égal au diamètre externe du bord annulaire 30a de l'entrée 30 du raccord 24. L'épaulement annulaire externe 36a est ainsi aligné axialement avec le bord annulaire 30a de l'entrée 30 du raccord 24.

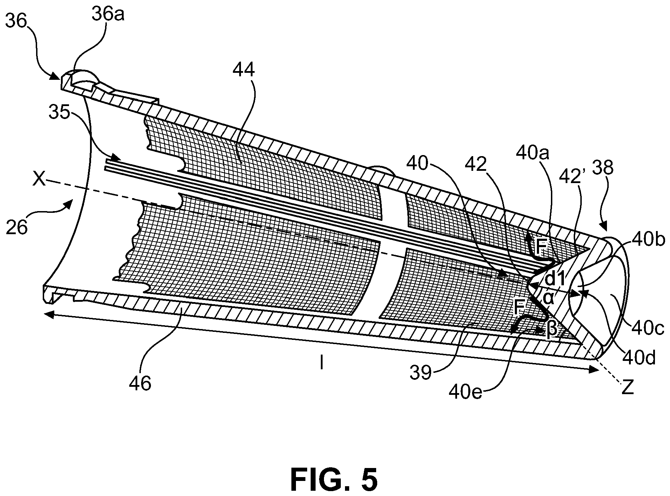

La seconde extrémité longitudinale 38 est située à l'intérieur du raccord 24, et préférentiellement à l'aval de la troisième tubulure 24e. La seconde extrémité longitudinale 38 est fermée par une paroi de fond 40. En référence à la figure 5, la paroi de fond 40 présente une surface amont 40a située à l'intérieur du filtre 26 et une surface aval 40b perpendiculaire à l'axe longitudinal X et située en dehors du second passage interne 35.

Selon l'invention, la paroi de fond 40 converge vers l'axe longitudinal X et vers la première extrémité longitudinale 36 du filtre 26. La surface amont 40a est donc conique ou tronconique et présente un sommet 42 centré sur l'axe longitudinal X et situé à l'intérieur du filtre 26, dans le passage interne 35 et une base 42' opposé au sommet.

Selon le mode de réalisation de la figure 5, la surface amont 40 est conique. Le sommet 42 est pointu.

La longueur axiale de la surface amont 40 conique ou tronconique de la paroi de fond 40 est au moins égal au diamètre de la base de cette surface. La paroi de fond 40 présente une épaisseur telle que mesurée selon l'axe longitudinal X variable. Cette épaisseur est maximale au niveau de l'axe longitudinal X du filtre 26 et décroit vers la périphérie de la paroi de fond 40. Préférentiellement, la paroi de fond 40 présente une dimension longitudinale d1 maximale telle que mesurée selon l'axe longitudinal X qui représente entre 2% et 20%, de préférence entre 5% et 10% de la longueur l du filtre 26. Cette dimension longitudinale d1 est mesurée le long de l'axe longitudinal X entre le sommet 42 et la surface aval 40b. Elle représente ainsi l'épaisseur maximale de la paroi de fond 40. Cette épaisseur maximale est au moins 1,5 fois supérieure à l'épaisseur minimale de la paroi de fond 40 mesurée au niveau de sa périphérie.

Préférentiellement, la surface amont 40a conique présente une génératrice Z formant un angle α avec l'axe longitudinal X compris entre 10° et 45°. L'angle α représentant le demi angle au sommet du cône.

La paroi de fond 40 est avantageusement en matériau polymère choisi par exemple parmi les polyamides. Elle est par exemple surmoulée.

Une telle surface amont 40a conique ou tronconique permet de guider le flux de fluide de refroidissement F vers la paroi de filtration 39 comme illustré par les flèches sur la figure 5. Un tel guidage du flux permet de diminuer les perturbations du flux de refroidissement dans le circuit de refroidissement 10. Les pertes de charges dans le circuit de refroidissement sont donc limitées. La surface amont 40a conique présentant un sommet 42 pointu permet d'améliorer encore le guidage du flux de refroidissement F vers la paroi de filtration 39.

En outre, la longueur avantageuse de la surface amont 40a conique ou tronconique permet de créer une surface de guidage plus importante pour améliorer encore le guidage du flux de refroidissement F vers la paroi de filtration 39.

La paroi de fond 40 est reliée à la paroi de filtration 39 par un rebord annulaire 40c situé à la seconde extrémité 38 du filtre 26. Avantageusement, la paroi de fond 40 et la paroi de filtration 39 forment un angle β compris entre 5° et 45°, l'angle β étant mesuré dans un plan passant par l'axe longitudinal X. Le rebord annulaire 40c est en matériau polymère identique au matériau de la paroi de fond 40. Le rebord annulaire 40 est par exemple surmoulé avec la paroi de fond 40.

La paroi de fond 40 présente en outre un creux 40d, encore appelé cavité, situé en dehors du passage interne 35. Ce creux 40d présente une surface tronconique présentant une extrémité amont et une extrémité aval présentant un diamètre supérieur au diamètre de l'extrémité amont. L'extrémité amont de plus petit diamètre est reliée ou formée par la surface aval 40b de la paroi de fond 40 tandis que l'extrémité aval de plus grand diamètre est délimitée radialement par le rebord annulaire 40c. Le creux 40d présente au moins un point d'injection d'un matériau polymère. Un tel creux 40d facilite la fabrication du filtre 26 par moulage. En effet, le creux 40d constitue une zone au niveau de laquelle peut être prévu un point d'injection du matériau polymérique lors de la mise en oeuvre du procédé de moulage. Le point d'injection étant dans ce creux 40d, la paroi de fond 40 ne présente avantageusement aucune partie saillante pouvant nuire à la sécurité des opérateurs lors de la manipulation et le montage du filtre 26. Par ailleurs, lors de l'injection du matériau polymérique, l'épaisseur axiale maximale de la paroi de fond 40 favorise la répartition uniforme du matériau dans le moule et limite les défauts de moulage.

En outre, le creux 40d permet de réduire l'encombrement du filtre 26. En effet, à surface de filtration égale, la dimension axiale du filtre 26 est réduite grâce au creux 40d comparé à une paroi de fond 40 dépourvue d'un tel creux 40d.

En outre, le filtre 26 comprend un espace de stockage 40e des particules délimitée par la base 42' de la surface amont 40a de la paroi de fond 40 et radialement par la paroi de filtration 39. L'espace de stockage 40e permet l'accumulation et le stockage des particules dans la partie aval du filtre 26 sans réduire la surface utile de filtration du filtre 26.

La paroi de filtration 39 présente une forme sensiblement tronconique. La paroi de filtration 39 présente avantageusement un diamètre interne qui diminue en direction de la sortie 28 du raccord 24.

Le filtre 26 comprend une toile filtrante 44 et un 46 corps surmoulé. La toile filtrante 44 constitue la paroi de filtration 39. Elle s'étend ainsi entre les première et seconde extrémités longitudinales 36, 38. En particulier, la toile filtrante 44 s'étend de l'épaulement annulaire 36a jusqu'au rebord annulaire 40c.

La toile filtrante 44 présente des pores de filtration pour le passage du fluide de refroidissement tout en retenant les particules contaminantes. Les pores présentent par exemple une taille de l'ordre du micromètre, par exemple compris entre 10 µm et 500 µm.

La toile filtrante 44 présente avantageusement une surface de filtration comprise entre 60% et 95% de la surface externe totale du filtre 26, en particulier entre 70% et 80% de la surface externe totale du filtre 26.

La toile filtrante 44 comprend un textile, de préférence tissé, comprenant des fils en polymère. Le polymère des fils est par exemple choisi parmi les polyamides, les polyoléfines telles que le polypropylène, le polyéthylène ou encore les polyesters.

Les fils présentent de préférence un diamètre moyen compris entre 100 µm et 2000 µm.

Avantageusement, le textile de la toile filtrante 44 est dépourvu de charges comprenant des fibres.

Selon un premier mode de réalisation, le corps 46 est surmoulé sur la toile filtrante 44.

Durant l'opération de surmoulage du corps 46, le maintien de la toile filtrante 44 est amélioré grâce à la surface amont 40a conique ou tronconique.

Le corps 46 comprend des nervures longitudinales 48 et avantageusement des nervures annulaires 50 reliées aux nervures longitudinales 50. Les nervures longitudinales 48 et les nervures annulaires 50 sont selon ce premier mode de réalisation surmoulées sur la toile filtrante 44.

Les nervures longitudinales 48 sont régulièrement réparties autour de l'axe longitudinal X.

Selon ce premier mode de réalisation, elles s'étendent en outre de la première extrémité longitudinale 36 jusqu'à la seconde extrémité longitudinale 38 du filtre 26.

Les nervures longitudinales 48 sont préférentiellement situées exclusivement à l'extérieur de la toile filtrante 44 afin de reprendre les efforts liés à la pression interne. Les nervures longitudinales 48 sont par exemple au nombre de deux, trois, quatre ou cinq ou plus selon le diamètre du filtre 26.

Les nervures annulaires 50 sont centrées sur l'axe longitudinal X. Elles sont régulièrement réparties le long de l'axe longitudinal X. Le corps 46 présente par exemple une première nervure annulaire située sur la première extrémité longitudinale 36 et formant l'épaulement annulaire 36a, une deuxième nervure annulaire située sur la seconde extrémité longitudinale 38 et formant le rebord annulaire 40c et selon ce mode de réalisation une troisième nervure annulaire centrale 50a située à égale distance des première et seconde nervures annulaires.

La paroi de fond 40 fait avantageusement partie intégrante du corps 46.

Le corps 46 comprend un matériau polymère, préférentiellement identique au matériau polymère de la toile filtrante 44. Préférentiellement, le matériau polymère est choisi parmi les polyamides. Le corps 46 est par exemple formé par surmoulage.

Le corps 46 permet de renforcer la toile filtrante 44 contre les efforts liés notamment à la pression interne du circuit de refroidissement 10.

Selon l'invention, le filtre 26 est monté dans le raccord 24 de manière amovible et de préférence par clipsage. A cet effet, le filtre 26 comprend avantageusement au moins une languette 52 de fixation s'emboîtant par clipsage dans une lumière 34 correspondante du raccord 24. Avantageusement, le filtre 26 comprend une pluralité de languettes 52 régulièrement réparties autour de l'axe longitudinal X. En particulier, le filtre 26 comprend autant de languettes 52 que de lumières 34 et de nervures longitudinales 48.

Les languettes 52 sont ménagées sur la périphérie externe de la première extrémité longitudinale 36 du filtre. Préférentiellement, les languettes 52 sont alignées axialement avec les nervures longitudinales 48 ou situées sur les nervures longitudinales 48.

Préférentiellement, les languettes 52 sont surmoulées sur la toile filtrante 44. Elles sont par exemple formées lors de la fabrication du corps 46 et font ainsi partie intégrante du corps 46.

Les languettes 52 présentent une forment polygonale, préférentiellement sensiblement rectangulaire. Elles présentent chacune un ergot 52a et une extrémité d'appui 52a permettant l'insertion des ergots 52a dans les lumières 34 correspondantes par pression du raccord 24 sur les languettes 52. Les ergots 52a permettent de bloquer en translation et en rotation le filtre 26 dans le raccord 24.

Une telle liaison amovible, et de préférence par clipsage, permet de faciliter le montage et le démontage du filtre 26 dans le raccord 24. L'installation du dispositif de filtration 22 ainsi que sa maintenance sont facilitées.

Par ailleurs, la configuration conique de la paroi de fond 40 permet de guider le liquide de refroidissement vers la paroi de filtration 39 afin de réduire les perturbations du flux du fluide de refroidissement dans le raccord 24 et ainsi diminuer les pertes de charge dans le circuit de refroidissement 10.

Grâce au dispositif de filtration 22 de l'invention, il est donc possible de facilement monter et démonter le filtre 26, et garantir l'écoulement du fluide de refroidissement dans le circuit de refroidissement 10 sans pertes de charges significatives.

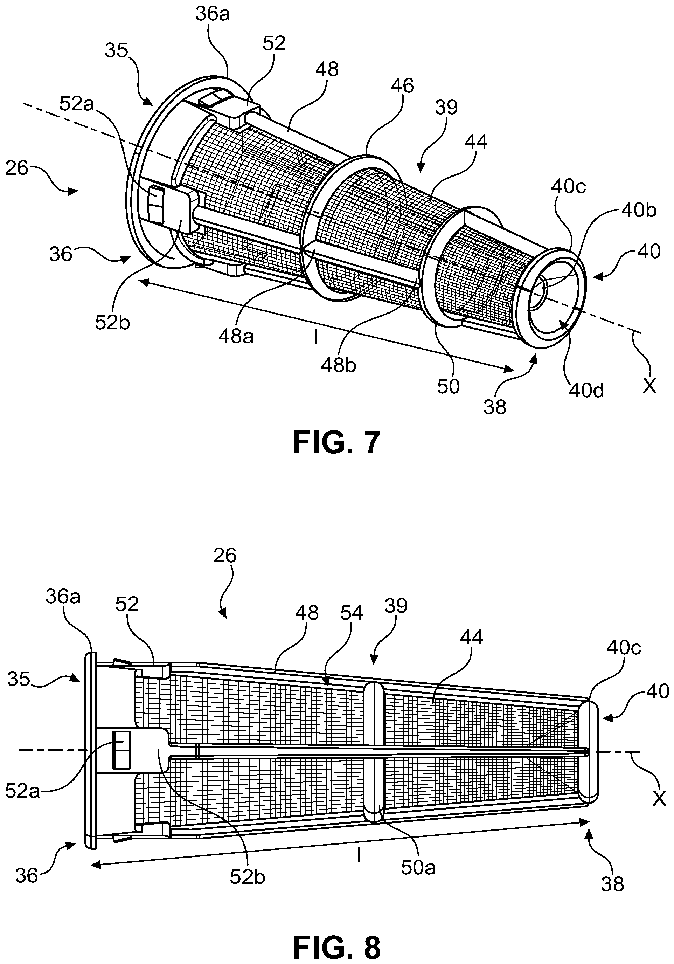

La figure 7 illustre un second mode de réalisation du filtre 26. L'ensemble de la description des figures 1 à 6 s'applique au second mode de réalisation. Seules les différences sont décrites ci-après.

Le filtre 26 de la figure 7 diffère du filtre 26 du premier mode de réalisation décrit ci-dessus en ce que les nervures longitudinales 48 s'étendent de manière discontinue entre les première et seconde extrémités 36, 38 du filtre 26. Selon ce seconde mode de réalisation, chaque nervure longitudinale 48 présente une première extrémité 48a reliée à une nervure annulaire 50 et une seconde extrémité 48b reliée à une autre nervure annulaire 50 adjacente. Les nervures longitudinales 48 peuvent être alignées axialement ou désalignées. Les nervures longitudinales 48 peuvent être réparties régulièrement ou irrégulièrement autour de l'axe longitudinal X.

En outre, selon ce mode de réalisation, le filtre 26 présente quatre nervures annulaires 50 régulièrement réparties le long de l'axe longitudinal X, les nervures annulaires 50 situées aux extrémités formant respectivement l'épaulement annulaire externe 36a et le rebord annulaire 40c.

La figure 8 illustre un troisième mode de réalisation du filtre 26. L'ensemble de la description des figures 1 à 6 s'applique au troisième mode de réalisation. Seules les différences sont décrites ci-après.

Le filtre 26 de la figure 8 diffère du filtre 26 du premier mode de réalisation en ce que les nervures longitudinales 46 sont fixées aux nervures annulaires 50a et en ce qu'un espace radial 54 est ménagé entre la toile filtrante 44 et chaque nervure longitudinale 46. Selon ce mode de réalisation, seules les nervures annulaires 50 sont surmoulées sur la toile filtrante 44.

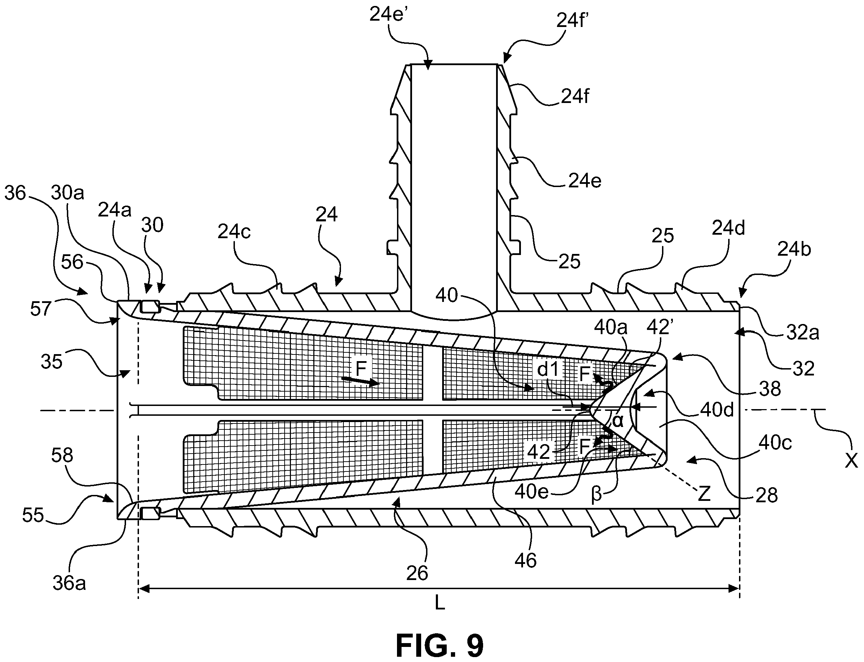

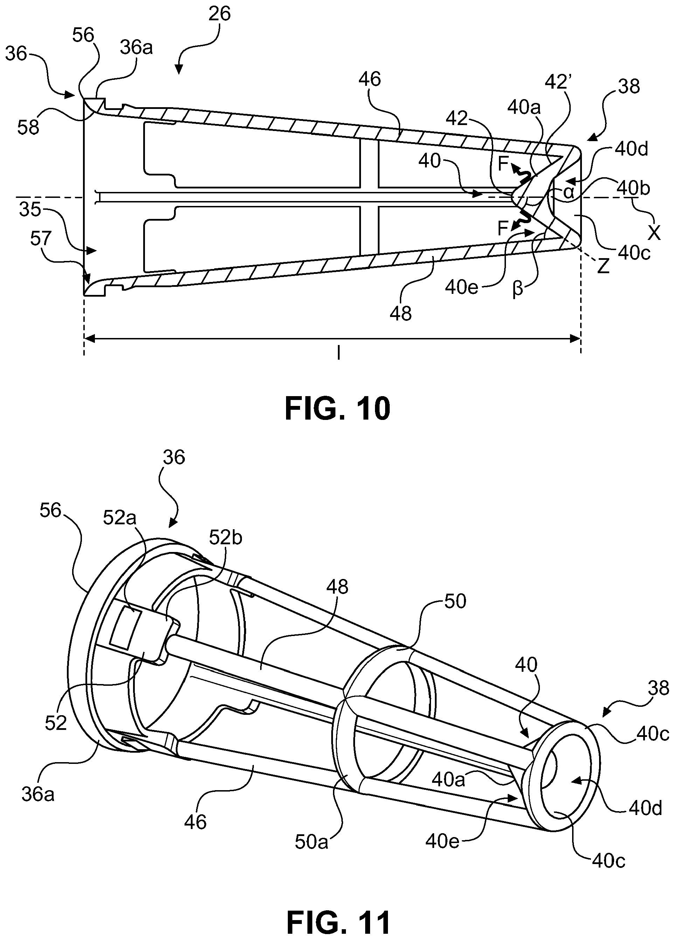

Les figures 9 à 11 illustrent un mode de réalisation de l'invention. L'ensemble de la description des figures 1 à 8 s'applique à ce mode de réalisation.

Le filtre 26 présente une entrée 55 du fluide F située du côté de la première extrémité longitudinale 36 et donc à l'opposé de la paroi de fond 40. L'entrée 55 est en appui sur le raccord 24. L'entrée 55 peut être formée par l'épaulement ou la lèvre 36a.

L'entrée 55 est annulaire et centrée sur l'axe longitudinal X.

L'entrée 55 présente une forme générale évasée en direction de la première extrémité longitudinale et vers l'extérieur du filtre 26, donc en s'éloignant de l'axe longitudinal X.

L'entrée 55 présente un bord périphérique 56 libre et une surface interne 57. La surface interne 57 présente un arrondi 58. L'arrondi 58 s'étend jusqu'au bord périphérique 56 de l'entrée 55. L'arrondi 58 présente de manière préférée un rayon compris entre 2 mm et 10 mm, encore plus préférentiellement entre 3 mm et 5 mm.

L'entrée 55 est venue de matière avec le corps 46 du filtre 26.

L'entrée 55 du filtre 26 présentant un tel arrondi 58 permet de limiter les perturbations de l'écoulement du fluide. En outre, l'entrée 55 est formée directement sur le corps 46 du filtre 26 si bien qu'aucune pièce supplémentaire n'est nécessaire pour former l'entrée du filtre.

## Revendications

1. Dispositif de filtration (22), en particulier pour un circuit de refroidissement (10), le dispositif de filtration (22) comprenant :
- un raccord (24) tubulaire comportant au moins une entrée (30) de fluide de refroidissement et au moins une sortie (32) de ce fluide de refroidissement,
- un filtre (26) à particules monté dans ledit raccord (24) et s'étendant dans le raccord (24) depuis ladite entrée (30), ce filtre (26) ayant une forme générale allongée et comportant une première extrémité longitudinale (36) ouverte située du côté de ladite entrée (30) et une seconde extrémité longitudinale (38) fermée située à l'intérieur du raccord (24), ce filtre (26) comportant une toile filtrante (44) s'étendant autour et le long d'un axe longitudinal (X) du filtre (26), et un corps (46) surmoulé,
**caractérisé en ce que** le filtre (26) est monté de manière amovible dans ledit raccord (24) et **en ce que** ladite seconde extrémité (38) présente une paroi de fond (40) qui converge vers l'axe longitudinal (X) et vers ladite première extrémité longitudinale (36).

2. Dispositif de filtration selon la revendication précédente, **caractérisé en ce que** la paroi de fond (40) comprend une surface conique ou tronconique (40a) qui est située à l'intérieur du filtre (26) et qui présente un sommet (42) centré sur l'axe longitudinal (X).

3. Dispositif de filtration selon la revendication précédente, **caractérisé en ce que** ladite surface conique ou tronconique (40a) présente une génératrice (Z) formant un angle (α) avec l'axe longitudinal (X) compris entre 10° et 45°.

4. Dispositif de filtration selon l'une des revendications 2 à 3, **caractérisé en ce que** la paroi de fond (40) a une dimension longitudinale (d1) le long dudit axe longitudinal (X), qui représente entre 2 et 20%, et de préférence entre 5 et 10%, d'une longueur (l) du filtre (26) le long de cet axe longitudinal (X).

5. Dispositif de filtration selon l'une quelconque des revendications précédentes, **caractérisé en ce que** le filtre (26) comprend une paroi de filtration (39) tronconique au niveau de laquelle est située la toile filtrante (44), la paroi de fond (40) étant reliée à cette paroi de filtration (39) par un rebord annulaire (40c) située à la seconde extrémité longitudinale (38) du filtre (26).

6. Dispositif de filtration selon la revendication précédente, **caractérisé en ce que** la paroi de fond (40) définit, à l'extérieur du filtre (26), un creux (40d) qui est centré sur ledit axe longitudinal (X) et qui est entouré par ledit rebord annulaire (40c).

7. Dispositif de filtration selon la revendication précédente, **caractérisé en ce que** le creux (40d) comprend au moins un point d'injection de matière.

8. Dispositif de filtration selon la revendication précédente, **caractérisé en ce que** le creux (40d) présente une surface tronconique dont une extrémité de plus petit diamètre est reliée à une surface (40b) sensiblement perpendiculaire audit axe longitudinal (X).

9. Dispositif de filtration selon la revendication précédente, **caractérisé en ce qu'**une extrémité de plus grand diamètre de la surface tronconique est reliée audit rebord annulaire (40c).

10. Dispositif de filtration selon l'une quelconque des revendications précédentes, **caractérisé en ce que** la première extrémité longitudinale (36) présente un épaulement annulaire (36a) externe en appui axial sur un bord annulaire (30a) de l'entrée (30) du raccord (24).

11. Dispositif de filtration selon l'une quelconque des revendications précédentes, **caractérisé en ce que** le filtre (26) est monté par clipsage dans ledit raccord (24).

12. Dispositif de filtration selon la revendication précédente, **caractérisé en ce que** la première extrémité longitudinale (36) présente à sa périphérie externe au moins une languette (52) de fixation, et le raccord (26) présente au moins une lumière (34) dans laquelle la languette (52) s'emboite par clipsage.

13. Dispositif de filtration selon l'une quelconque des revendications précédentes, **caractérisé en ce que** le corps (46) comprend des nervures longitudinales (48), et avantageusement des nervures annulaires (50) surmoulées sur la toile filtrante (44) et qui s'étendent autour de l'axe longitudinal (X) et sont reliées auxdites nervures longitudinales (48).

14. Dispositif de filtration selon l'ensemble des revendications 12 et 13, **caractérisé en ce que** le nombre de languettes (52) est égal au nombre de nervures longitudinales (48) et les languettes (52) sont alignées axialement avec les nervures longitudinales (48) ou sont situées sur ces nervures longitudinales (48).

15. Dispositif de filtration selon l'une quelconque des revendications précédentes, **caractérisé en ce que** le filtre (26) comprend une entrée (55) opposée à la seconde extrémité longitudinale (38), l'entrée (55) présentant un arrondi (58).
